# EUROPEAN PATENT SPECIFICATION

(11) **EP 2 127 203 B1**
(45) Date of publication and mention of the grant of the patent: **07.05.2014**
(21) Application number: 07859005.6
(22) Date of filing: 11.12.2007
(51) Int. Cl.: H04L 12/16, H04L 12/58, H04M 3/42

(54) **MEDIA CONTEXT INFORMATION**
MEDIENKONTEXTINFORMATION
INFORMATION DE CONTEXTE MULTIMÉDIA

(30) Priority: 14.12.2006 US 610878
(43) Date of publication of application: 02.12.2009
(73) Proprietor: Nortel Networks Limited, St. Laurent, QC H4S 2A9 (CA)
(72) Inventor: YOAKUM, Graham C., Cary, NC 27511 (US); YOAKUM, John H., Cary, NC (US)
(74) Representative: Brophy, David Timothy
(86) International application number: PCT/IB2007/003868
(87) International publication number: WO 2008/072066

(56) References cited:
- WO-A2-01/45322
- WO-A2-01/45342
- WO-A2-2007/134305
- CN-A- 1 630 319
- US-A1- 2004 003 042
- US-A1- 2004 059 781
- US-A1- 2005 079 873
- US-A1- 2005 079 873
- US-A1- 2006 143 646
- US-A1- 2006 143 646
- US-A1- 2007 121 867
- US-B1- 7 227 937
- PAEK ET AL.: 'Toward Universal Mobile Interaction for Shared Display' CSCW '04, [Online] 06 November 2004, CHICAGO, ILLINOIS, XP008136922 Retrieved from the Internet: <URL:http://research.microsoft.com/-timpaek /Papers/cscw2004.pdf> [retrieved on 2008-04-01]
- VOGEL ET AL.: 'Consistency Control for Synchronous and Asynchronous Collaboration based on Shared Objects and Activities', [Online] 27 August 2004, NETHERLANDS, XP019236200 Retrieved from the Internet: <URL:http://www.eml-development.de/english/ homes/vogel/articles_vogeljn/ Vogel2005b.pdf> [retrieved on 2008-04-01]

## Description

### Field of the Invention

The present invention relates to providing media context information, and in particular to delivering the media context information to a user element, which will take action based on the media context information.

### Background of the Invention

Given the rapid expansion of mobile communications along with the pervasiveness of email and instant messaging, determining the right method or location to contact someone often proves difficult. Many people are associated with numerous telephone numbers, email addresses, instant messaging identifiers, and the like. Trying to contact such people often leads to leaving one or more voicemails and perhaps sending email or instant messaging messages prior to making contact. Further, trading numerous voicemails prior to finally connecting with one another is commonplace.

Presence systems have been developed to address the difficulty in determining if someone is available to communicate, and perhaps how best to communicate with that person when she is available. In general, presence systems monitor state information from one or more devices or networks associated with a particular person, and process the state information to create presence information bearing on the relative availability of that particular person. The presence information is then sent to those subscribers interested in knowing the relative availability of the particular person. The state information generally bears on a person's physical presence or activity with respect to a certain device.

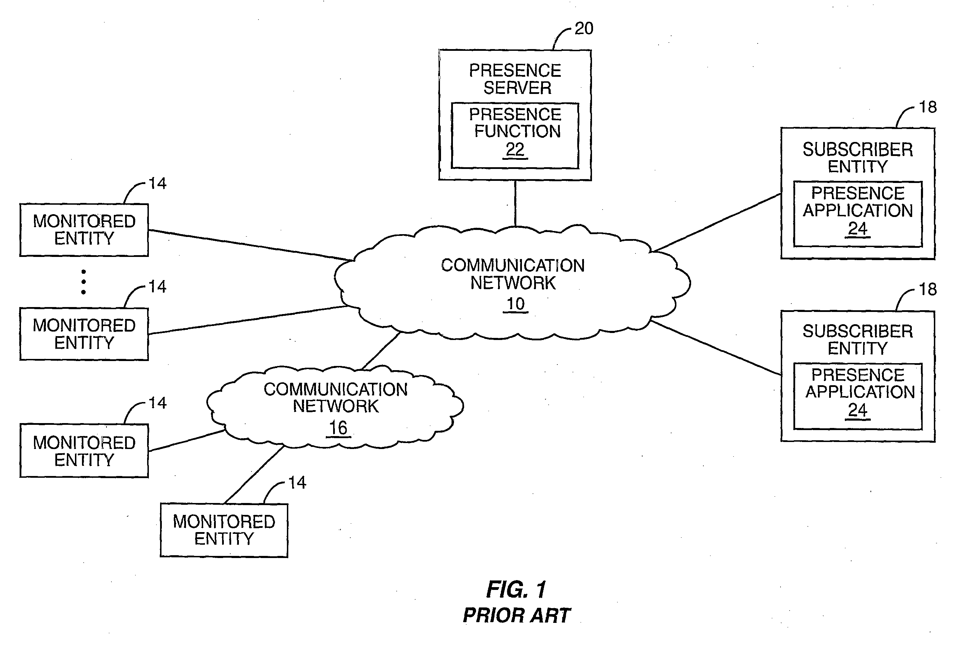

An exemplary presence system is illustrated in Figure 1. A communication network 10 is configured to support communications with any number of monitored entities 14, directly or indirectly through another communication network 16, as well as supporting communications with various subscriber entities 18 to which presence information is delivered. A presence server 20 is provided and includes a presence function 22, which processes the state information to create presence information to provide to the subscriber entities 18. The subscriber entities 18 may include presence applications 24, which process the presence information and operate to control the subscriber entity 18 as necessary to provide presence alerts to the subscriber based on the presence information. The subscriber entities 18 and certain of the monitored entities 14 may take the form of user terminals, such as mobile telephones, personal digital assistants, personal computers, and the like. Any given user terminal may act as a monitored entity 14 and a subscriber entity 18 for different users.

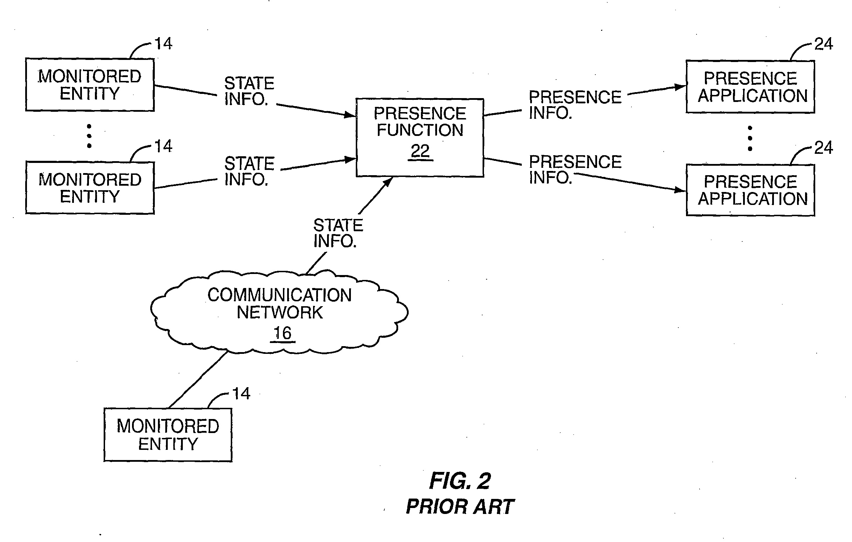

With reference to Figure 2, the basic flow for presence processing is illustrated. In operation, the monitored entities 14 will recognize certain states or state changes in light of a monitored person's interaction, use, or physical presence. These states may take various forms and may be gathered from any type of device to assist in providing information related to a person's actions, location, or availability. The monitored entity 14 will provide state information to the presence function 22 as states change, on a periodic basis, or upon request from the presence function 22. Notably, the communication network 16 may actually generate the state information in light of certain interactions with the monitored entity 14, or may simply pass state information from the monitored entity 14 to the presence function 22. Regardless of how the state information is received, state information for a monitored person is processed in light of defined presence rules and the state information to create presence information for the monitored person. Presence information is then sent to subscribing presence applications 24. The presence information may be provided to the presence applications 24 when the presence information changes, on a periodic basis, or upon request from the presence application 24. The presence applications 24 may present presence indicators or related information bearing on the location or general availability of the monitored person to the subscriber associated with the subscriber entity 18. Based on the presence information, the subscriber may make an informed decision as to when and how to initiate communications with the monitored person

Unfortunately, presence systems have been focused on providing information that assists a subscriber in making a decision as to when or how to initiate communications with the monitored person. As such, little has been done to extend presence systems beyond simply providing information sufficient to help facilitate communications between subscribers and monitored people. For example, presence information could be used by a subscriber to take actions that loosely follow or mirror the activities of a monitored person. These actions could be taken by the subscriber with or without the specific knowledge of the monitored person.

Such functionality would be particularly beneficial to allow a subscriber to follow or mirror the activities that a monitored person takes in relation to accessing media content. A subscriber could use the presence information to listen to the same song that is being listened to by the monitored person or navigate to the same slide in a presentation that is being viewed by the monitored person. Accordingly, there is a need for an efficient and effective way to extend the functionality of presence systems to provide information sufficient to allow subscribers to follow or mirror the activities that monitored people take in relation to accessing media content.

US 2006/143646 discloses an automatic subscription to presence services which is achieved using a communications manager within a presence system.

US 2004/059781 discloses a presence system capable of efficiently controlling the delivery of presence information for select individuals to a subscriber

The prior art does not disclose, nor hint, the generation of any media context information from media state information.

### Summary of the Invention

The present invention enables one entity to take actions that relate to or loosely parallel another entity with regard to media content. In particular, a presence system is configured to receive state information from any number of monitored entities. In addition to traditional state information that is related to a user's general availability or activity, the presence system may also receive media state information. The media state information is indicative of a user accessing media content, and may include various media related information, such as an identifier for the media content, the type of media content, an application necessary to provide access to the media content, a location where the media content is stored, a location for information related to the media content, or any combination thereof. The media related information may also provide a relative location within the media content that corresponds to where the user is located at any given time within the media content.

The presence system will process the state information and the media state information provided from any number of monitored entities, which are associated with a given user. In light of available presence rules, the presence system may generate presence information and media context information. The presence information will bear on the relative availability of a monitored user, and the media context information will bear on the monitored user's access to the media content. The media context information may include certain of the media related information provided by the monitored entities or information based thereon. The media context information is then sent to the subscribing entities of subscribers to the presence information. The media context information may be provided in the presence information that is delivered to the subscribing entities.

Once the presence information and the media context information is received, a subscribing entity will update any presence indicators that provide presence information to the subscriber. The presence indicators or other mechanism may also provide certain of the media context information to the subscriber, such that the subscriber is able to determine that the monitored user is accessing the media content. In response to subscriber input or in an automated fashion, the subscribing entity may identify the media content or a corresponding theme or subject matter, access the media content or any information related thereto, or navigate to a location within the media content using the media context information. Accordingly, a subscribing user is able to access the same or similar media content that is currently being accessed by the monitored user, access information related to the media content, as well as navigate to an approximate location within the media content where the monitored user is located. The applications used by the subscribing user and monitored entities to access the media content may be different application types.

Those skilled in the art will appreciate the scope of the present invention and realize additional aspects thereof after reading the following detailed description of the preferred embodiments in association with the accompanying drawing figures.

### Brief Description of the Drawing Figures

The accompanying drawing figures incorporated in and forming a part of this specification illustrate several aspects of the invention, and together with the description serve to explain the principles of the invention.
FIGURE 1 is a block diagram of a communication network incorporating a presence system.
FIGURE 2 illustrates a basic process flow in a presence system.
FIGURE 3 is a flow diagram for delivering presence information according to one embodiment of the present invention.
FIGURE 4 is a block representation of a communication environment according to one embodiment of the present invention.
FIGURES 5A-5C is a flow diagram for controlling session initiation based on user-defined conditions according to one embodiment of the present invention.
FIGURE 6 is a block representation of a presence server according to one embodiment of the present invention.
FIGURE 7 is a block representation of a subscriber entity according to one embodiment of the present invention.

### Detailed Description of the Preferred Embodiments

The embodiments set forth below represent the necessary information to enable those skilled in the art to practice the invention and illustrate the best mode of practicing the invention. Upon reading the following description in light of the accompanying drawing figures, those skilled in the art will understand the concepts of the invention and will recognize applications of these concepts not particularly addressed herein. It should be understood that these concepts and applications fall within the scope of the disclosure and the accompanying claims.

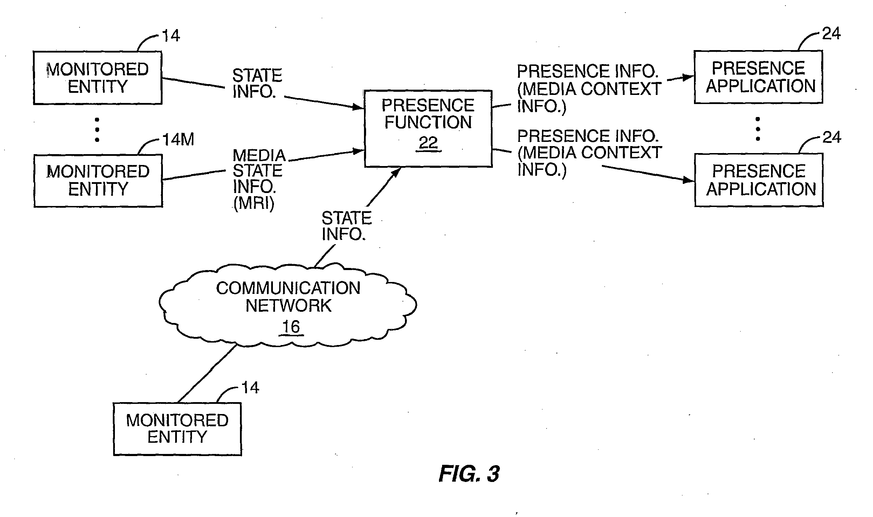

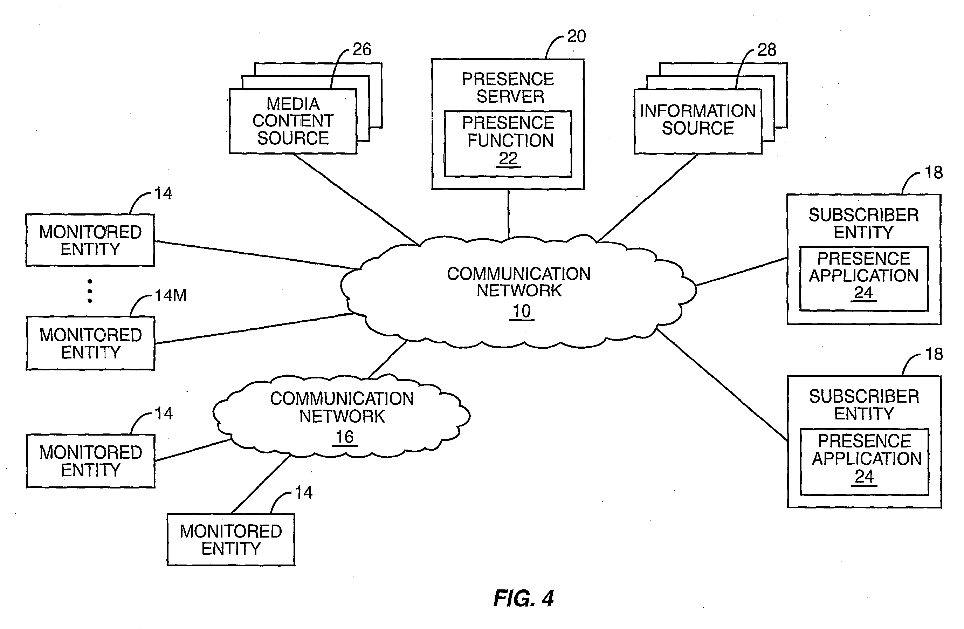

With reference to Figures 3 and 4, the present invention enables a subscriber to take actions that relate to or loosely parallel a monitored person with regard to media content. In particular, the presence function 22 is configured to receive state information from any number of monitored entities 14. In addition to traditional state information that relates to a user's general availability or activity, the presence function 22 may also receive media state information from select monitored entities 14M. The media state information is indicative of a user accessing media content and may include various media related information, such as an identifier for the media content, the type of media content, an application necessary to provide access to the media content, a location where the media content is stored, a location for information related to the media content, or any combination thereof.

The media related information may also provide a relative location within the media content that corresponds to where the user is located at any given time within the media content. For example, the location in the media content may correspond to a chapter or location in a book, movie, or television program, a time in a video or song, a page in a document, or slide in a presentation. The media related information may identify the, title, artist, author, composer, singer, creator, or the like associated with artistic, literary, scientific, or like media content. The media related information may also provide information bearing on the theme or the subject matter associated with the media content.

The presence function 22 will process the state information and the media state information provided from any number of monitored entities 14, 14M, which are associated with a given user. In light of available presence rules, the presence function 22 may generate presence information and media context information. The presence information will bear on the relative availability of a monitored user, and the media context information will bear on the monitored user's access to the media content. The media context information may include certain of the media related information provided by the monitored entities or information based thereon. The media context information is then sent to the presence applications 24 (in the subscriber entities 18) of subscribers who subscribe to the presence information. In one embodiment, the media context information is provided in the presence information that is delivered to the presence applications 24.

Once the presence information and the media context information are received, a presence application 24 of the subscriber entity 18 will update any presence indicators that provide presence information to the subscriber. The presence indicators or other mechanism may also provide certain of the media context information to the subscriber, such that the subscriber is able to determine that the monitored user is accessing the media content. In response to subscriber input or in an automated fashion, the subscriber entity 18 may identify the media content or a corresponding theme or subject matter, access the media content or any information related thereto, or navigate to a location within the media content using the media context information. Accordingly, a subscribing user is able to access the same or similar media content that is currently being accessed by the monitored user, access information related to the media content, as well as navigate to an approximate location within the media content where the monitored user is located. With the present invention, the subscribing user is enabled to loosely track the actions of the monitored user without establishing a communication session with the monitored user.

With particular reference to Figure 4, various media content sources 26 and information sources 28 are available from which the media content and any related information may be obtained by the subscriber entity 18 based on the media context information. In another embodiment, the subscriber entity 18 may obtain the media content from the monitored entity 14. The media content may include, but is not limited to, data, pictures, audio, video, and voice content. The media content may be stored and accessed in any electronic form by an appropriate software application. As such, the media content may represent a word processing document, spreadsheet, slide presentation, audio file, video file, image file, web page, or any compilation thereof.

The media content accessed by the subscriber entity 18 may come from a different source or be slightly different than the media content being accessed by the monitored entity 14. Any of the various media content sources 26 may be used by the subscriber entity 18 to obtain the same or similar media content based on media context information. For example, if a song being played by the monitored entity 14 is not resident on the subscriber entity 18, the song may be downloaded by the subscriber entity 18 from the media content source 26, even if the monitored entity 14 obtained the song from a different source in the same or a different audio format. Accordingly, "media content" is used to identify any copy, version, or independent creation of electronic content that is substantially similar in nature. Again using a song as an example, the media content may relate to different copies of the same source material as well as different recordings of the same song by the same or different artist. Those skilled in the art will recognize certain applications of the present invention where the same or identical copies of the media content is beneficial and others where similar or related media content is all that is required.

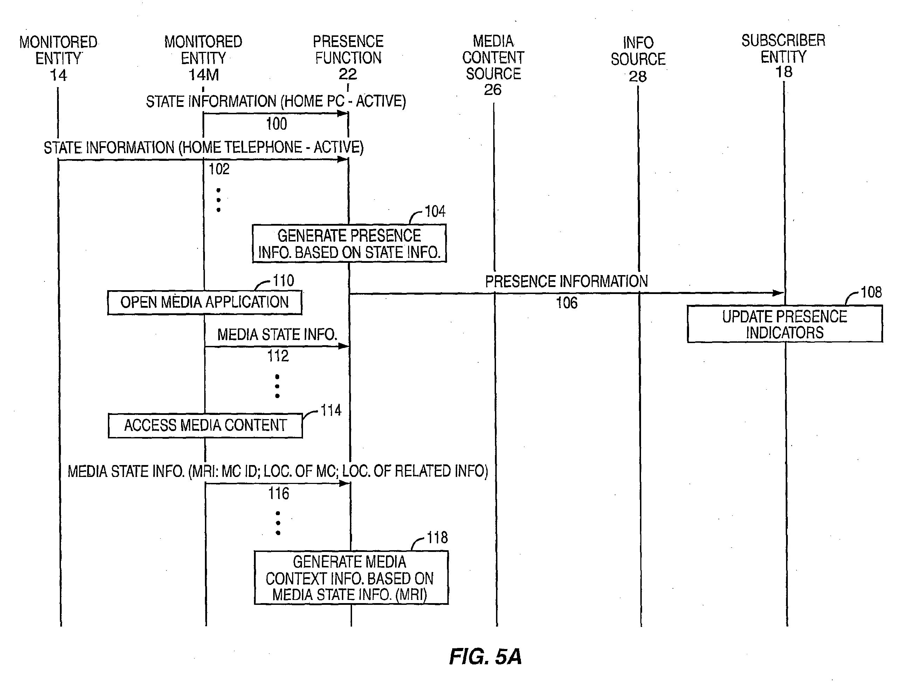

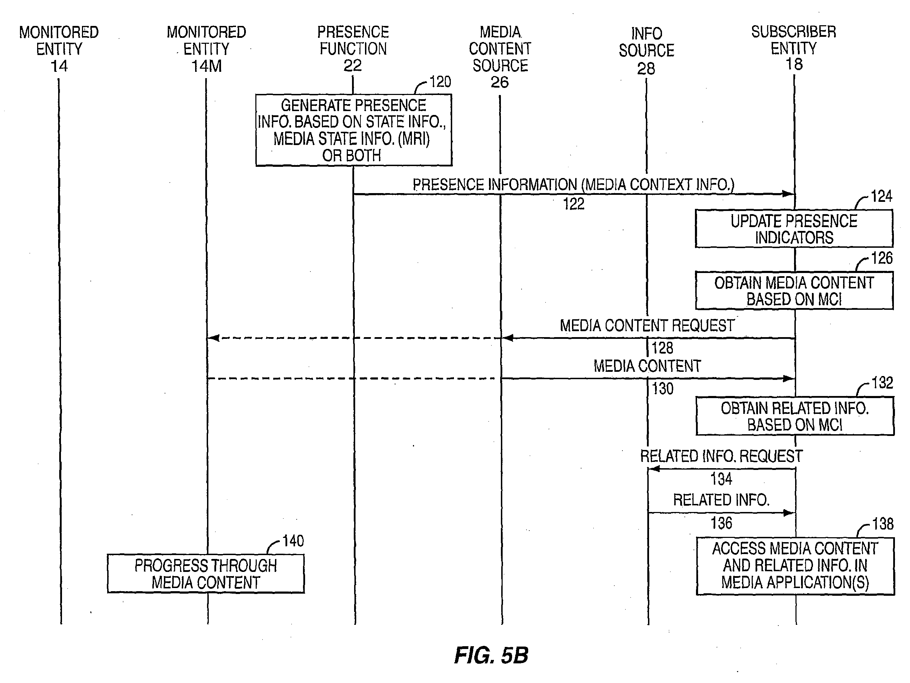

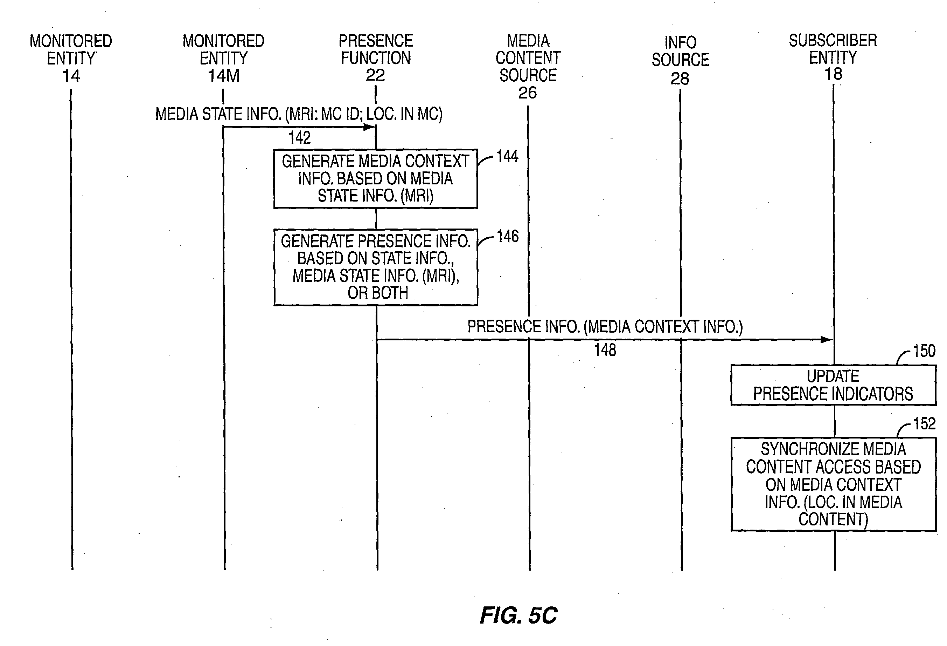

The communication flow of Figures 5A-5C illustrates a scenario where media state information and traditional state information are processed by a presence function 22 to provide presence information and associated media context information to a subscriber entity 18. The subscriber entity 18 will process the presence information and the media context information to update presence indicators that are provided to the subscriber and take select actions that correlate to those actions taken by the monitored person in relation to certain media content

Initially, assume that state information from various monitored entities 14 and the monitored entity 14M is systematically provided to a presence function 22 (steps 100 and 102). In this example, the state information from the monitored entity 14M indicates that the monitored person is currently active on her home personal computer. The monitored entity 14M could be the home personal computer or other entity monitoring the monitored person's interaction with the home personal computer. The other monitored entity 14 illustrated in the communication flows is providing state information that indicates that the monitored person is actively engaged in a telephone call on her home telephone. In traditional fashion, the presence function 22 may generate presence information based on the state information received from the monitored entity 14 and the monitored entity 14M in light of any applicable presence rules (step 104), and deliver the presence information to a subscriber entity 18 (step 106). The subscriber entity 18 will process the presence information and update any presence indicators to provide information to the subscriber (step 108). The information provided to the subscriber may relate to the general location or availability of the monitored person for communications. The presence function 22 may continue to monitor state information from both the monitored entity 14 and the monitored entity 14M, and update the presence information provided to the subscriber entity 18 in a systematic fashion.

During such presence operation, assume that the monitored person opens a media application, such as a media player, at monitored entity 14M (step 110) with the intent to listen to music. The monitored entity 14M may be configured to recognize such an action as state information and provide corresponding media state information indicating that the media application has been opened to the presence function 22 (step 112). The monitored entity 14M may also access certain media content, such as a certain song or playlist of songs (step 114). Again, the monitored entity 14M may recognize the selection of a song or playlist as state information and provide corresponding media state information to the presence function 22 (step 116). The media state information may include media-related information (MRI), such as a media content (MC) identifier (ID), the location where a copy of the media content may be obtained, as well as the location of information relating to the media content.

Armed with the media state information received from the monitored entity 14M, the presence function 22 may generate media context information based on the media state information, and perhaps based on other information, in light of the presence or other rules (step 118). The presence function may also generate updated presence information based on the available state information, media state information, or both, if necessary in light of the presence rules (step 120). The presence function 22 may then send the media context information to the subscriber entity 18, preferably as the presence information or information that is part of or closely associated with the presence information (step 122). The subscriber entity 18 may update its presence indicators in light of the new presence information and media context information (step 124). The presence indicators may indicate that the monitored person has opened a media application, selected a particular song or playlist, and has begun listening to a particular song.

Once the subscriber entity 18 has the media context information, the subscriber entity 18 may take numerous actions to allow the subscriber to loosely follow the actions of the monitored person as those actions relate to the media content. For example, the subscriber entity may obtain a copy of the media content based on the media context information (step 126). If the media content is not stored locally on the subscriber entity 18, the subscriber entity 18 may send a media content request to a media content source 26, which may have been identified in the media context information (step 128). The media content source 26 will respond by delivering the media content to the subscriber entity 18 (step 130). As noted above, the subscriber entity 18 may alternately request and receive the media content from the monitored entity 14M. The subscriber entity 18 may also obtain information related to the media content based on the media context information provided by the presence function 22 (step 132). Again, if the related information is not stored locally on the subscriber entity 18, a related information request may be sent to an appropriate information source 28 (step 134), which will respond with the appropriate related information (step 136).

At this point, the subscriber entity 18 may access the media content and any related information in one or more appropriate media applications (step 138). Assuming the media content is a song or playlist, the subscriber may begin listening to the song or a song within the playlist. The actions of the subscriber now loosely correspond to those actions of the monitored entity 14M in relation to the media content. Notably, the actions taken by the subscriber may be taken automatically upon receiving the media content information, or may be triggered based on instructions provided by the subscriber after viewing certain presence or media content information.

Continuing with the example, assume that the monitored entity 14M continues to play a particular song, and as such, the monitored entity 14M is progressing through the media content (step 140). Such progression may correspond to a location within the media content. Based on such information, the monitored entity 14M may provide updated media state information to the presence function 22 (step 142). The media state information may include media related information identifying the media content and the location in the media content at which the monitored person is currently located. The presence function 22 may generate the media context information based on the media state information (step 144) as well as generate presence information based on any updated state information and perhaps the media state information, in light of the presence rules (step 146) and send updated presence information along with updated media context information to the subscriber entity 18 (step 148).

The subscriber entity 18 will update the presence indicators (step 150) to present any updated presence information to the subscriber, as well as identify the location in the media content where the monitored person is located. If the media content is a song, the media context information may identify a part of the song that is currently being listened to by the monitored person. If the media content corresponds to a playlist, the updated media context information may identify the particular song in the playlist that is being listened to by the monitored person. If the media content corresponds to a slide presentation, the updated media context information may identify the slide being viewed by the monitored person. Accordingly, providing location information corresponding to where the monitored person is located within the media content allows the subscriber entity 18 or the subscriber to substantially synchronize access to the media content with that of the monitored entity 14M or monitored person, respectively. As such, the subscriber entity 18 may automatically or in response to subscriber input synchronize the media content access based on the media context information (step 152). Based on the teachings herein, those skilled in the art will recognize numerous variations in presenting and responding to media context information.

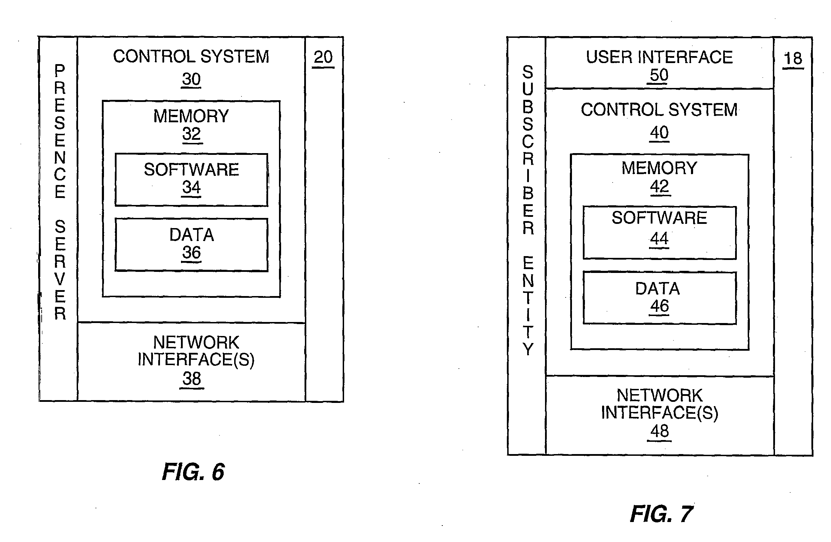

With reference to Figure 6, a block representation of a presence server 20 or appropriate service node is illustrated as having a control system 30 with sufficient memory 32 for the requisite software 34 and data 36 to operate as described above. The presence function 22 may be implemented in the software 34. The control system 30 may also be associated with one or more network interfaces 38 to facilitate communications with the various monitored entities 14 and subscriber entities 18, as well as any other network entity.

With reference to Figure 7, a block representation of a subscriber entity 18, such as a mobile terminal, computer, personal digital assistant, or like user terminal is illustrated. The subscriber entity 18 will include a control system 40 having sufficient memory 42 for the requisite software 44 and data 46 to operate as described above. In select embodiments, the presence function 22 may be implemented in the software 44. The control system 40 may also be associated with one or more network interfaces 48 to facilitate communications with various network entities, such as other subscriber entities 18, monitored entities 14, and the presence server 20. The control system 40 is also associated with a user interface 50, which may include a microphone, speaker, display, keyboard, and the like to facilitate communication sessions, provide information, such as presence indicators and contextual information to the user, and receive information from the user. Notably, agiven user element may be both a subscriber entity 18 and a monitored entity 14 depending on who is being monitored and who is subscribing to presence information for those being monitored.

## Claims

1. A method of operating a subscriber terminal (18) associated with a subscriber comprising:
• receiving, from a presence system (20), media context information 106 indicative of a monitored user accessing media content, the presence system adapted to generate the media context information from media state information (100, 102) received from at least one monitored entity (14) associated with the monitored user, wherein the media state information comprises information that indicates what media content the monitored user is currently accessing and
• providing, at the subscriber terminal (18), an action related to that taken by the monitored entity (14) with regard to the media content, wherein the action provided at the subscriber terminal (18) is based on the media context information, and wherein the subscriber is able to access the same or similar media content that is currently being accessed by the monitored user.

2. The method of claim 1 wherein the media context information identifies the media content being accessed by the monitored user, and the action provided at the subscriber terminal (18) is accessing the media content for the subscriber.

3. The method of claim 1 wherein the media content accessed by the monitored entity and the media content accessed by the subscriber terminal (18) are not identical.

4. The method of claim 1 wherein the media content is accessed by the monitored entity using a first application type and the media content is accessed by the subscriber using a second application type.

5. The method of claim 1 wherein the media context information further identifies a location of the media content being accessed by the monitored user, and the action provided at the subscriber terminal (18) is accessing the media content for the subscriber based on the location of the media content.

6. The method of claim 5 wherein the media content is accessed by the subscriber terminal (18) from a source other than the monitored entity.

7. The method of claim 1 wherein the media context information identifies a location of information related to the media content being accessed by the monitored user, and the action provided at the subscriber terminal (18) is accessing the information related to the media content for the subscriber based on the location of the information.

8. The method of claim 1 wherein the media context information identifies a location in the media content at which the monitored user is accessing the media content, and the action provided at the subscriber terminal (18) is navigating to the location in the media content for the subscriber such that accessing the media content at the subscriber terminal (18) is substantially synchronized with accessing the media content at the monitored entity.

9. The method of claim 1 wherein there is no communication session related to the media content between the monitored user and the subscriber.

10. The method of claim 1 wherein the media content comprises at least one of a group consisting of data, picture, audio, video, and voice content and/or wherein the media content is stored in at least one of a group consisting of a word processing document, spreadsheet, slide presentation, audio file, video file, image file, and web page.

11. The method of claim 1 further comprising receiving from the presence system presence information bearing on a relative location or availability of the monitored user for communications.

12. The method of claim 11 further comprising providing presence indicators to the subscriber based on the presence information and the media context information, wherein the presence indicators provide information related to the relative location or availability of the monitored user for communications as well as certain of the media context information to identify the action related to that taken by the monitored entity with regard to the media content.

13. The method of claim 1 wherein the action related to that taken by the monitored entity (14) with regard to the media content is automatically initiated at the subscriber terminal (18).

14. The method of claim 1 wherein the action related to that taken by the monitored entity (14) with regard to the media content is triggered in response to an input provided by the subscriber in response to being presented certain of the media context information.

15. A subscriber terminal (18) associated with a subscriber comprising:
• at least one network interface (48); and
• a control system (40) associated with the at least one network interface and adapted to:
• receive, from a presence system (20), media context information (106) indicative of a monitored user accessing media content, the presence system adapted to generate the media context information from media state information received from at least one monitored entity (14) associated with the monitored user, wherein the media state information comprises information that indicates what media content the monitored user is currently accessing; and
• provide an action related to that taken by the monitored entity (14) with regard to the media content, wherein the action provided at the subscriber terminal (18) is based on the media context information, and wherein the subscriber is able to access the same or similar media content that is currently being accessed by the monitored user.

## Patentansprüche

1. Verfahren zum Betreiben eines mit einem Teilnehmer assoziierten Teilnehmerendgeräts (18), das Folgendes beinhaltet:
• Empfangen, von einem Präsenzsystem (20), von Medienkontextinformationen (106), die anzeigen, dass ein überwachter Benutzer auf Medieninhalt zugreift, wobei das Präsenzsystem zum Erzeugen der Medienkontextinformationen von Medienzustandsinformationen (100, 102) ausgelegt ist, die von wenigstens einer mit dem überwachten Benutzer assoziierten überwachten Einheit (14) empfangen werden, wobei die Medienzustandsinformationen Informationen beinhalten, die anzeigen, auf welchen Medieninhalt der überwachte Benutzer gegenwärtig zugreift, und
• Bereitstellen, am Teilnehmerendgerät (18), einer Aktion, die sich auf die von der überwachten Einheit (14) mit Bezug auf den Medieninhalt durchgeführte bezieht, wobei die am Teilnehmerendgerät (18) bereitgestellte Aktion auf den Medienkontextinformationen basiert und wobei der Teilnehmer auf denselben oder auf ähnlichen Medieninhalt zugreifen kann, auf den gegenwärtig der überwachte Benutzer zugreift.

2. Verfahren nach Anspruch 1, wobei die Medienkontextinformationen den Medieninhalt identifizieren, auf den der überwachte Benutzer zugreift, und die am Teilnehmerendgerät (18) bereitgestellte Aktion das Zugreifen auf den Medieninhalt für den Teilnehmer ist.

3. Verfahren nach Anspruch 1, wobei der Medieninhalt, auf den die überwachte Einheit zugreift, und der Medieninhalt, auf den das Teilnehmerendgerät (18) zugreift, nicht identisch sind.

4. Verfahren nach Anspruch 1, wobei die überwachte Einheit mit einem ersten Anwendungstyp auf den Medieninhalt zugreift und der Teilnehmer mit einem zweiten Anwendungstyp auf den Medieninhalt zugreift.

5. Verfahren nach Anspruch 1, wobei die Medienkontextinformationen ferner einen Ort des Medieninhalts identifizieren, auf den der überwachte Benutzer zugreift, und die am Teilnehmerendgerät (18) bereitgestellte Aktion das Zugreifen auf den Medieninhalt für den Teilnehmer auf der Basis des Orts des Medieninhalts ist.

6. Verfahren nach Anspruch 5, wobei das Teilnehmerendgerät (18) von einer anderen Quelle als der überwachten Einheit auf den Medieninhalt zugreift.

7. Verfahren nach Anspruch 1, wobei die Medienkontextinformationen einen Ort von Informationen mit Bezug auf den Medieninhalt identifizieren, auf den der überwachte Benutzer zugreift, und die am Teilnehmerendgerät (18) bereitgestellte Aktion das Zugreifen auf die Informationen mit Bezug auf den Medieninhalt für den Teilnehmer auf der Basis des Orts der Informationen ist.

8. Verfahren nach Anspruch 1, wobei die Medienkontextinformationen einen Ort im Medieninhalt identifizieren, an dem der überwachte Benutzer auf den Medieninhalt zugreift, und die am Teilnehmerendgerät (18) bereitgestellte Aktion das Navigieren zu dem Ort im Medieninhalt für den Teilnehmer ist, so dass das Zugreifen auf den Medieninhalt am Teilnehmerendgerät (18) im Wesentlichen mit dem Zugreifen auf den Medieninhalt an der überwachten Einheit synchronisiert wird.

9. Verfahren nach Anspruch 1, wobei es keine Kommunikationssitzung in Bezug auf den Medieninhalt zwischen dem überwachten Benutzer und dem Teilnehmer gibt.

10. Verfahren nach Anspruch 1, wobei der Medieninhalt wenigstens ein Mitglied der Gruppe umfasst, die aus Daten, Bild, Audio, Video und Sprachinhalt besteht, und/oder wobei der Medieninhalt in wenigstens einem Mitglied der Gruppe bestehend aus Textverarbeitungsdokument, Kalkulationstabelle, Folienpräsentation, Audiodatei, Videodatei, Bilddatei und Webseite gespeichert wird.

11. Verfahren nach Anspruch 1, das ferner das Empfangen von Präsenzinformationen von dem Präsenzsystem beinhaltet, die sich auf eine(n) relative(n) Ort oder Verfügbarkeit des überwachten Benutzers für Kommunikationen stützen.

12. Verfahren nach Anspruch 11, das ferner das Bereitstellen von Präsenzindikatoren für den Teilnehmer auf der Basis der Präsenzinformationen und der Medienkontextinformationen beinhaltet, wobei die Präsenzindikatoren Informationen über den/die relative(n) Ort oder Verfügbarkeit des überwachten Benutzers für Kommunikationen sowie bestimmte der Medienkontextinformationen bieten, um die Aktion in Bezug auf die zu identifizieren, die die überwachte Einheit mit Bezug auf den Medieninhalt durchführt.

13. Verfahren nach Anspruch 1, wobei die Aktion in Bezug auf die von der überwachten Einheit (14) mit Bezug auf den Medieninhalt durchgeführte automatisch am Teilnehmerendgerät (18) eingeleitet wird.

14. Verfahren nach Anspruch 1, wobei die Aktion in Bezug auf die von der überwachten Einheit (14) mit Bezug auf den Medieninhalt durchgeführte als Reaktion auf eine Eingabe ausgelöst wird, die vom Teilnehmer als Reaktion darauf bereitgestellt wird, dass bestimmte der Medienkontextinformationen präsentiert werden.

15. Teilnehmerendgerät (18), das mit einem Teilnehmer assoziiert ist, das Folgendes umfasst:
• wenigstens einen Netzwerkschnittstelle (48); und
• ein Steuersystem (40), das mit der wenigstens einen Netzwerkschnittstelle assoziiert ist und ausgelegt ist zum:
• Empfangen, von einem Präsenzsystem (20), von Medienkontextinformation (106), die anzeigen, dass ein überwachter Benutzer auf Medieninhalt zugreift, wobei das Präsenzsystem zum Erzeugen der Medienkontextinformationen von Medienzustandsinformationen ausgelegt ist, die von wenigstens einer mit dem überwachten Benutzer assoziierten überwachten Einheit (14) empfangen werden, wobei die Medienzustandsinformationen Informationen beinhalten, die anzeigen, auf welchen Medieninhalt der überwachte Benutzer gegenwärtig zugreift; und
• Bereitstellen einer Aktion in Bezug auf die, die von der überwachten Einheit (14) mit Bezug auf den Medieninhalt durchgeführt wird, wobei die am Teilnehmerendgerät (18) bereitgestellte Aktion auf den Medienkontextinformationen basiert und wobei der Teilnehmer auf denselben oder auf ähnlichen Medieninhalt zugreifen kann, auf den gegenwärtig der überwachte Benutzer zugreift.

## Revendications

1. Un procédé d'exploitation d'un terminal d'abonné (18) associé à un abonné comprenant :
• la réception, à partir d'un système de présence (20), d'informations de contexte multimédia (106) indicatives d'un utilisateur surveillé accédant à un contenu multimédia, le système de présence étant adapté de façon à générer les informations de contexte multimédia à partir d'informations d'état multimédia (100, 102) reçues d'au moins une entité surveillée (14) associée à l'utilisateur surveillé, où les informations d'état multimédia comprennent des informations indiquant à quel contenu multimédia l'utilisateur surveillé est actuellement en train d'accéder, et
• la fourniture, au niveau du terminal d'abonné (18), d'une action liée à celle prise par l'entité surveillée (14) concernant le contenu multimédia, où l'action fournie au niveau du terminal d'abonné (18) est basée sur les informations de contexte multimédia, et où l'abonné est en mesure d'accéder au même contenu multimédia ou un contenu similaire à celui qui est actuellement accédé par l'utilisateur surveillé.

2. Le procédé selon la Revendication 1 où les informations de contexte multimédia identifient le contenu multimédia qui est accédé par l'utilisateur surveillé, et l'action fournie au niveau du terminal d'abonné (18) est l'accès au contenu multimédia pour l'abonné.

3. Le procédé selon la Revendication 1 où le contenu multimédia accédé par l'entité surveillée et le contenu multimédia accédé par le terminal d'abonné (18) ne sont pas identiques.

4. Le procédé selon la Revendication 1 où le contenu multimédia est accédé par l'entité surveillée au moyen d'un premier type d'application et le contenu multimédia est accédé par l'abonné au moyen d'un deuxième type d'application.

5. Le procédé selon la Revendication 1 où les informations de contexte multimédia identifient en outre un emplacement du contenu multimédia qui est accédé par l'utilisateur surveillé, et l'action fournie au niveau du terminal d'abonné (18) est l'accès au contenu multimédia pour l'abonné en fonction de l'emplacement du contenu multimédia.

6. Le procédé selon la Revendication 5 où le contenu multimédia est accédé par le terminal d'abonné (18) à partir d'une source autre que l'entité surveillée.

7. Le procédé selon la Revendication 1 où les informations de contexte multimédia identifient un emplacement d'informations relatives au contenu multimédia qui est accédé par l'utilisateur surveillé, et l'action fournie au niveau du terminal d'abonné (18) est l'accès aux informations relatives au contenu multimédia pour l'abonné en fonction de l'emplacement des informations.

8. Le procédé selon la Revendication 1 où les informations de contexte multimédia identifient un emplacement dans le contenu multimédia à partir de duquel l'utilisateur surveillé accède au contenu multimédia, et l'action fournie au niveau du terminal d'abonné (18) est la navigation vers l'emplacement dans le contenu multimédia pour l'abonné de sorte que l'accès au contenu multimédia au niveau du terminal d'abonné (18) est sensiblement synchronisé avec l'accès au contenu multimédia au niveau de l'entité surveillée.

9. Le procédé selon la Revendication 1 où il n'y a pas de session de communication relative au contenu multimédia entre l'utilisateur surveillé et l'abonné.

10. Le procédé selon la Revendication 1 où le contenu multimédia comprend au moins un contenu d'un groupe se composant de données, images, contenu audio, vidéo et vocal et/ou où le contenu multimédia est conservé en mémoire dans au moins un élément d'un groupe se composant d'un document de traitement de texte, une feuille de calcul, une présentation de diapositives, un fichier audio, un fichier vidéo, un fichier image et une page Web.

11. Le procédé selon la Revendication 1 comprenant en outre la réception, à partir du système de présence, d'informations de présence portant sur une disponibilité ou un emplacement relatif de l'utilisateur surveillé pour des communications.

12. Le procédé selon la Revendication 11 comprenant en outre la fourniture d'indicateurs de présence à l'abonné en fonction des informations de présence et des informations de contexte multimédia, où les indicateurs de présence fournissent des informations relatives à la disponibilité ou l'emplacement relatif de l'utilisateur surveillé pour des communications, ainsi que certaines des informations de contexte multimédia destinées à identifier l'action liée à celle prise par l'entité surveillée concernant le contenu multimédia.

13. Le procédé selon la Revendication 1 où l'action liée à celle prise par l'entité surveillée (14) concernant le contenu multimédia est mise en oeuvre automatiquement au niveau du terminal d'abonné (18).

14. Le procédé selon la Revendication 1 où l'action liée à celle prise par l'entité surveillée (14) concernant le contenu multimédia est déclenchée en réponse à une entrée fournie par l'abonné en réponse à la présentation de certaines des informations de contexte multimédia.

15. Un terminal d'abonné (18) associé à un abonné comprenant :
• au moins une interface de réseau (48), et
• un système de commande (40) associé à la au moins une interface de réseau et adapté de façon à :
• recevoir, à partir d'un système de présence (20), des informations de contexte multimédia (106) indicatives d'un utilisateur surveillé accédant à un contenu multimédia, le système de présence étant adapté de façon à générer les informations de contexte multimédia à partir d'informations d'état multimédia reçues d'au moins une entité surveillée (14) associée à l'utilisateur surveillé, où les informations d'état multimédia comprennent des informations indiquant à quel contenu multimédia l'utilisateur surveillé est actuellement en train d'accéder, et
• fournir une action liée à celle prise par l'entité surveillée (14) concernant le contenu multimédia, où l'action fournie au niveau du terminal d'abonné (18) est basée sur les informations de contexte multimédia, et où l'abonné est en mesure d'accéder au même contenu multimédia ou un contenu similaire à celui qui est actuellement accédé par l'utilisateur surveillé.
